(19) Europäisches Patentamt
European Patent Office
Office européen des brevets

(11) **EP 2 233 012 A1**

(12) **EUROPEAN PATENT APPLICATION**
published in accordance with Art. 153(4) EPC

(43) Date of publication:
**29.09.2010 Bulletin 2010/39**

(51) Int Cl.:
***A23F 5/10*** *(2006.01)*     ***A23F 5/24*** *(2006.01)*

(21) Application number: **08864034.7**

(22) Date of filing: **24.12.2008**

(86) International application number:
**PCT/JP2008/073429**

(87) International publication number:
**WO 2009/081937 (02.07.2009 Gazette 2009/27)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **26.12.2007 JP 2007335009**

(71) Applicant: **Suntory Holdings Limited
Kita-ku
Osaka-shi
Osaka 530-8203 (JP)**

(72) Inventors:
• **MORINAGA, Takuma
Mishima-gun
Osaka 618-0001 (JP)**
• **NAKAHARA, Koichi
Kawasaki-shi
Kanagawa 211-0067 (JP)**

(74) Representative: **Vossius & Partner
Siebertstrasse 4
81675 München (DE)**

(54) **METHOD OF TREATING SUGAR-ENRICHED ROASTED COFFEE BEANS, ROASTED COFFEE BEANS AND COFFEE DRINK**

(57)     A method for treating roasted coffee beans, to improve an extraction rate of coffee component from the roasted coffee beans and to increase a richness component content of the roasted coffee beans while suppressing acidity generation in the roasted coffee beans, includes: a sugar-enriching treatment step in which roasted coffee beans are brought into contact with sugar to increase a sugar content of the roasted coffee beans; and a water vapor treatment step in which the roasted coffee beans having undergone the sugar-enriching treatment are brought into contact with water vapor.

EP 2 233 012 A1

**Description**

Technical field

The present invention relates to a method for treating roasted coffee beans including a water vapor treatment step in which the roasted coffee beans are brought into contact with water vapor, roasted coffee beans treated by the method, and a coffee beverage made from the roasted coffee beans.

Background art

In general, in order to improve an extraction rate of coffee component included in the roasted coffee beans (which herein includes: a flavor component providing elements of taste, aroma, and color specific to coffee; a richness component providing elements of richness and thickness of coffee; and the like), a water vapor treatment is performed in which the roasted coffee beans are brought into contact with water vapor. However, this treatment increases an acidity of the roasted coffee beans, and thus it is likely that an excessive acidity is added to a coffee beverage obtained through an extraction from the roasted coffee beans.
Accordingly, as described in Patent Document 1, there had been proposed a method for treating roasted coffee beans in which generation of acidity in the roasted coffee beans can be suppressed, even when the water vapor treatment is performed on the roasted coffee beans for the purpose of improving the extraction rate of the coffee component.
Patent Document 1: International Publication WO2005/011396

Disclosure of the invention

According to the treatment method described in Patent Document 1, it is possible to improve the extraction rate of the coffee component while suppressing the generation of acidity in the roasted coffee beans. However, the method does not necessarily promote a satisfactory increase in the content of richness component (which herein means a component that provides elements of richness and thickness of coffee, and examples include oligosaccharide and succinic acid) in the roasted coffee beans (for example, in the case of the roasted coffee beans of *Coffea robusta* or the like, the method does not satisfactorily increase the content of richness component).
It should be noted that, with respect to trials to increase the richness component content of the roasted coffee beans, there have been made various studies (e.g., elaborating the roasting method) for increasing the richness component content in the roasted coffee beans that have not so high commercial values due to their low richness component content (e.g., *C. robusta*), but no satisfactory effect has been obtained to this date.
The present invention was made with the view towards overcoming the above-mentioned disadvantages, and the purpose is to improve the extraction rate of the coffee component from the roasted coffee beans while suppressing the acidity generation in the roasted coffee beans, and to increase the richness component content in the roasted coffee beans.
In a first aspect of the method for treating roasted coffee beans according to the present invention, the method includes: a sugar-enriching treatment step in which roasted coffee beans are brought into contact with sugar to increase a sugar content of the roasted coffee beans; and a water vapor treatment step in which the roasted coffee beans having undergone the sugar-enriching treatment are brought into contact with water vapor.

[Action and effect]

According to the present invention, as shown in Examples 3 - 8 which will be described later, it becomes possible to improve the extraction rate of the coffee component from the roasted coffee beans while suppressing the acidity generation in the roasted coffee beans.
In addition, as will be described later in Examples 3 - 8, in the roasted coffee beans treated according to the present invention, it is possible to remarkably increase a content of succinic acid (one of richness component) which is taken as richness index in rice wine or the like. Therefore, according to the present invention, the richness component content in the roasted coffee beans can be increased.
It should be noted that it is the present inventors' intensive and extensive studies that led for the first time to the finding of the above-described fact, i.e., the above-described effects can be obtained by combining the sugar-enriching treatment step in which roasted coffee beans are brought into contact with sugar to increase a sugar content of the roasted coffee beans, and the water vapor treatment step in which the roasted coffee beans are brought into contact with water vapor.
In a second aspect of the method for treating roasted coffee beans according to the present invention, the roasted coffee beans are roasted whole beans.

[Action and effect]

According to the invention, the roasted coffee beans are roasted whole beans, and thus in water vapor treatment step the drainage of the flavor component and the richness component of coffee can be suppressed low, leading to enhancement of use efficiency of the roasted coffee beans as raw material.

In a third aspect of the method for treating roasted coffee beans according to the present invention, the sugar is selected from the group consisting of sucrose, glucose and maltose.

[Action and effect]

According to the present invention, sucrose, glucose, and maltose which are industrially available at low cost are used, and thus the richness component can be effectively given to the roasted coffee beans, such as *C. robusta.*

In a fourth aspect of the method for treating roasted coffee beans according to the present invention, the sugar-enriching treatment comprises a treatment of bringing the roasted coffee beans into contact with a sugar solution.

[Action and effect]

According to the present invention, the roasted coffee beans are brought into contact with the sugar solution, and thus the sugar component can be efficiently transferred into the roasted coffee beans through the medium.

In a fifth aspect of the method for treating roasted coffee beans according to the present invention, the sugar solution is an aqueous solution.

[Action and effect]

According to the present invention, water, which has a high solubility of sugar, is used as medium, and thus a sugar solution of a high concentration can be prepared, leading to efficient transfer of the sugar component into the roasted coffee beans.

In a sixth aspect of the method for treating roasted coffee beans according to the present invention, the roasted coffee beans are those of *Coffea robusta.*

[Action and effect]

According to the present invention, the richness component content of the *C. robusta* can be remarkably increased, leading to enhancement of commercial value of *C. robusta.*

In a seventh aspect of the method for treating roasted coffee beans according to the present invention, in the water vapor treatment step, the water vapor is brought into contact in a ventilated state.

[Action and effect]

According to the present invention, the contents of formic acid and acetic acid in the roasted coffee beans can be reduced, leading to secure suppression of the acidity generation in the roasted coffee beans.

In an eighth aspect of the method for treating roasted coffee beans according to the present invention, in the water vapor treatment step, the roasted coffee beans having undergone the sugar-enriching treatment are placed in a processing tank equipped with a water vapor supply pathway and a water vapor effluent pathway, and the water vapor is passed from the water vapor supply pathway to the water vapor effluent pathway so as to be discharged from the water vapor effluent pathway at a pressure higher than atmospheric pressure.

[Action and effect]

According to the present invention, by performing the water vapor treatment in a ventilated state, it becomes possible to eliminate formic acid and acetic acid generated by a pyrolysis reaction from the system, and thus the acidity of the treated roasted coffee beans is expected to be reduced.

In a ninth aspect of the method for treating roasted coffee beans according to the present invention, in the water vapor treatment step, the water vapor is brought into contact in a sealed state.

[Action and effect]

According to the present invention, the water vapor treatment is performed in a sealed state, and thus the richness component can be given without draining the aroma component from the roasted coffee beans.

In a tenth aspect of the method for treating roasted coffee beans according to the present invention, the water vapor is saturated water vapor whose temperature is 100°C-230°C.

[Action and effect]

According to the present invention, the water vapor temperature is set to 100°C - 230°C, and thus the richness component, such as succinic acid, can be produced efficiently.

In a first aspect of the roasted coffee bean according to the present invention, the roasted coffee bean is treated by the above-mentioned method for treating roasted coffee beans.

[Action and effect]

The roasted coffee beans of the present invention have a very high commercial value, with a high extraction rate of the coffee component, a low acidity, and a high content of the richness component.

In a second aspect of the roasted coffee beans according to the present invention, a succinic acid content is 0.69 mg/g or more.

[Action and effect]

The roasted coffee beans of the present invention have a very high commercial value, with a high content of succinic acid as richness component.

In an aspect of the coffee beverage according to the present invention, it is made from the above-mentioned roasted coffee beans.

[Action and effect]

The coffee beverage of the present invention has an excellent flavor with a low acidity but with deep richness and thickness.

Best mode for carrying out the invention

The embodiments of the present invention will be described below.

[Embodiments]

Prior to describing the method for treating roasted coffee beans of the present invention, the roasted coffee beans and sugar used in the present invention will be described first.

(Roasted coffee beans)

There is no limitation with respect to the type of the roasted coffee beans to be used in the present invention, and examples include *Coffea arabica, Coffea robusta,* and *Coffea liberica.* It should be noted that, since the present invention is especially effective for roasted coffee beans having a small sugar content, *C. robusta,* such as *vietnam* and *conilon,* are preferably used.

In addition, in order to prevent the coffee components (such as flavor component and richness component of coffee) from draining, which may otherwise be caused by a continuous water vapor treatment, it is desired that the roasted coffee beans is in whole bean form or coarsely ground.

(Sugar)

There is no limitation with respect to the sugar to be used in the present invention, but preferable examples include: monosaccharide, such as glucose, galactose, and fructose; and disaccharide, such as sucrose, maltose, lactose, and cellobiose. It is more preferable to use sucrose contained especially in natural coffee beans.

Next, the method for treating roasted coffee beans of the present invention will be described below.

The method for treating roasted coffee beans of the present invention includes at least (1) sugar-enriching treatment step and (2) water vapor treatment step, which will be described below. Steps other than these (e.g., a step in which the roasted coffee beans are washed with water and dried after the sugar-enriching treatment step) may be added when desired.

(1) Sugar-enriching treatment step

The sugar-enriching treatment step is performed in which the roasted coffee beans and the sugar are brought into contact with each other to increase the sugar content of the roasted coffee beans.

There is no limitation with respect to the method for bringing the roasted coffee beans into contact with the sugar, and for example, a sugar solution prepared by dissolving sugar in a solvent, such as water, to a predetermined concentration may be brought into contact with the roasted coffee beans in an appropriate manner.

The sugar concentration of the sugar solution to be used is arbitrarily selected. However, in the case of a sugar solution of a low concentration, the coffee components are likely to be transferred to the solvent when a long-term contact is necessary, and thus it is preferable that the sugar concentration is at a level or higher that can prevent the transfer of the coffee components. On the other hand, in the case where the sugar concentration is excessively high, an operability of the treatment becomes poor, for example, a removal of the excessive sugar attached to the surface of the roasted coffee beans becomes difficult. The range thereof is preferably 10 wt% - 50 wt%, more preferably 20 wt% - 40 wt%, still more preferably 25 wt% - 35 wt%.

Examples of the method for brining the sugar solution into contact with the roasted coffee beans include spraying, application and immersion. Among these, immersion for a predetermined period of time (e.g., approximately 1 hour) is preferable, since the immersion allows the sugar to efficiently penetrate into the roasted coffee beans.

(2) Water vapor treatment step

Next, the water vapor treatment is performed in which the roasted coffee beans having undergone the sugar-enriching treatment and water vapor are brought into contact with each other.

The present step can be performed, for example, by a non-ventilated (batch-wise) water vapor treatment in which the above-described roasted coffee beans having undergone the sugar-enriching treatment are placed in a sealable pressure vessel, water vapor is supplied, and predetermined temperature and pressure are retained for a predetermined period of time.

However, it is preferable that the present step be performed by a continuous water vapor treatment in which, for example, in the water vapor treatment step, the roasted coffee beans having undergone the sugar-enriching treatment are placed in a processing tank equipped with a water vapor supply pathway and a water vapor effluent pathway, and the water vapor is passed from the water vapor supply pathway to the water vapor effluent pathway so as to be discharged from the water vapor effluent pathway at a pressure higher than atmospheric pressure. This is because, in the continuous water vapor treatment, by supplying the water vapor in a ventilated state, it becomes possible to eliminate formic acid and acetic acid generated by a pyrolysis reaction from the system, and thus the acidity in the roasted coffee beans is expected to be reduced.

There is no limitation with respect to the type of the water vapor to be used in the present step, and examples include saturated water vapor, superheated steam, and supersaturated water vapor. It is preferable that a quality of the water vapor is that of pure steam, which is vapor generated from pure water. However, the quality is not limited as long as water can be used for treating foods, and if desired, vapor may be generated from a mixture of water and an appropriate amount of alcohol added thereto.

It should be noted that the water vapor should not have extremely high temperature or high pressure, in order to retain increment of succinic acid, to suppress generation of formic acid and acetic acid, and to suppress carbonization of coffee beans.

Specifically, it is desirable that the treatment be performed at a temperature of 100°C - 230°C. For attaining this temperature condition, the pressure range is generally set to 0.1 MPa - 1.7 MPa, through the temperature range varies depending on the type of water vapor.

It is more preferable that the temperature range is approximately 165°C - 205°C, in which the extraction efficiency of the coffee component by the hydrothermal reaction treatment is enhanced. In order to attain this temperature condition, in the case of saturated water vapor, the pressure range is set to 0.7 MPa - 1.3 MPa.

It is further more preferable that the temperature range be 165°C - 190°C, in which the generation of acidity is suppressed. For attaining this temperature condition, in the case of saturated water vapor, the pressure range is set to 0.7 MPa - 0.9 MPa.

It should be noted that the term "pressure" herein means "gauge pressure" which is a pressure when the atmospheric pressure is 0. Accordingly, for example, when the "gauge pressure 0.1 MPa" is converted into absolute pressure, it is a pressure with a value of atmospheric pressure plus 0.1 MPa.

With the use of the technique of the present invention, the succinic acid content of the roasted coffee beans can be remarkably increased. For example, there can be obtained roasted coffee beans having the succinic acid content of 0.69 mg/g - 2.5 mg/g, or 0.8 mg/g - 2.0 mg/g or more.

According to the present invention, as will be described later in Examples, it becomes possible to improve the extraction rate of the coffee component from the roasted coffee beans while suppressing the acidity generation in the roasted coffee beans, and to increase the richness component content. Especially, by applying the present invention to the roasted coffee beans of *C. robusta* or the like that has less richness component and not so high commercial value, the commercial value thereof can be enhanced.

It should be noted that the roasted coffee beans treated according to the present invention can be used as one of coffee materials for coffee beverage, together with other roasted coffee beans (regular coffee beans), instant coffee, and liquid coffee extract, and that such a coffee beverage can be produced in a coffee beverage manufacturing plant by a common method. For example, in a case of production process of coffee beverage cans, the coffee beverage can be produced by performing steps of "grinding (regular coffee beans and the roasted coffee beans)", "extraction", "blending", "filtration", "filling", "seaming", "sterilization", "cooling", and "box packing". Alternatively, instant coffee, liquid coffee extract or the like may be prepared from the roasted coffee beans treated according to the present invention.

Examples

Hereinbelow, the present invention will be specifically described by referring to Examples, but the present invention is not limited to Examples.

[Example 1]

(Conditions)

- Roasted coffee beans: *C. arabica*
- Water vapor treatment step: continuous water vapor treatment (treatment conditions: temperature = 175°C, 190°C, 200°C; time period = 4 minutes)

For the roasted coffee beans, those having a high degree of roast (L value =18, *C. arabica*) in whole bean form were used.
In a pressure vessel (coffee bean container) having a pressure resistance to 3.0 MPa equipped with vapor inlet piping and outlet piping was placed 2.0 kg of roasted coffee beans and a water vapor treatment was performed in which saturated water vapor at a low pressure of 0.2 MPa (120°C) was passed from the vapor inlet piping at a flow rate of 210 kg/hr per kg of the roasted coffee beans. Three different treatment temperatures were used as standards (first treatment temperature: 175°C, second treatment temperature: 190°C, and third treatment temperature: 200°C), and for each temperature, a water vapor treatment was performed for 4 minutes and then vacuum drying was performed. As a result, three different water vapor treated roasted coffee beans for these treatment temperatures were obtained (sample 1 (175°C), sample 2 (190°C), and sample 3 (200°C)).

With respect to each of the samples 1 - 3 and untreated roasted coffee beans, the coffee beans were ground (medium grinding), 10 g of the ground coffee was added to 100 mL of water retained at 90°C under atmospheric pressure, an extraction was performed for 20 minutes, and paper filtration was performed to thereby obtain an extract.
These extracts were evaluated in terms of pH, acid degree, content of dissolved solid (Brix) including the coffee components, and extraction rate. For the measurement of pH, a type F23pH meter (manufactured by HORIBA, Ltd.) was used. For the measurement of the acid degree, a titration acidity was measured using CAM500 (manufactured by Kyoto Electronics Manufacturing Co., Ltd.) by a method based on JAS, and a value was expressed as an amount (relative value) of 0.1N NaOH required for titrating the extract up to pH7. For the measurement of Brix, RX-5000α (Atago Co., Ltd) was used, to whose measurement plate was dropwise added approximately 0.5 mL of the extract. The extraction rate was calculated based on the amount of the collected extract liquid (A), Brix (B), and the weight of the ground coffee beans (C), using the following equation:

$$\text{Extraction rate (\%)} = A\,(g) \times B\,(\%) / C\,(g).$$

A sensory evaluation was also performed, and with respect to each of the samples, the coffee beans were ground, 10 g of the ground coffee was put in a test glass, and 150 mL of boiled water was poured into the test glass to thereby obtain an extraction. First, a presence of off-flavor was checked while the coffee in the test glass was stirred well, and subsequently, tasting was performed with the coffee at an appropriate temperature (approximately 60°C). There were six graders who performed the sensory evaluation (checking the presence of richness/thickness, acidity, and off-flavor).

In the sensory evaluation, the richness/thickness was evaluated using a four-grade scale (1, 2, 3 and 4 points), in which a larger number means stronger and a smaller number means weaker. The acidity was evaluated using a four-grade scale, in which a larger number means weaker and a smaller number means stronger. An average of points given by the six trained graders was taken, and the scores of 3 points or more was marked as "O", the score of 2-point range was marked as "Δ", and the score of 1-point range was marked as "X".

The results are shown in Table 1 below. As compared with the untreated beans, the water vapor treated beans (samples 1-3) had a notably high extraction rate, while in terms of the treatment temperature, not so large difference was observed. With respect to the acidity, a sample (sample 3) was stronger than untreated beans, but the acidity can be suppressed to some degree when treated at 200°C or lower. It should be noted that, with respect to all of the samples, the presence of the off-flavor was not sensed. Hereinafter, the water vapor treatment was performed at 190°C, since the excellent result was obtained in the sensory test.

[Table 1]

| | | Untreated beans | Sample 1 (175°C) | Sample 2 (190°C) | Sample 1 (200°C) |
|---|---|---|---|---|---|
| Analytical value | pH | 5.14 | 4.76 | 4.69 | 4.69 |
| | Acid degree | 0.069 | 0.119 | 0.128 | 0.159 |
| | Brix | 2.83 | 3.59 | 3.87 | 4.02 |
| | Extraction rate (%) | 18.8 | 24.2 | 25.3 | 26.9 |
| Sensory evaluation | Richness/ Thickness | X | Δ | O | O |
| | Acidity | O | O | O | Δ |
| | Off-flavor | None | None | None | None |

[Example 2]

(Conditions)

- Roasted coffee beans: *C. arabica* and *C. robusta*
- Sugar-enriching treatment step: immersing the roasted coffee beans in a 30 wt% aqueous solution of sucrose

Next, it was examined whether or not the immersion in an aqueous solution of sucrose increases the sucrose content of the roasted coffee beans.

The test was performed on the roasted coffee beans of *C. arabica,* and roasted coffee beans of two types of *C. robusta* (*conilon* and *vietnam*).

For the sugar-enriching treatment step, 100 g of each of the roasted coffee beans was immersed in 500 mL of a 30 wt% aqueous solution of sucrose at room temperature for 1 hour, and then dried with hot air at 90°C for 1 hour. From each of the treated coffee beans, an extract was prepared (in Table 2, these extracts are referred to as "sample with sugar-enriching treatment"), and the sucrose concentration in the extract was measured with a high-performance liquid chromatography (manufactured by Shimadzu Corporation).

For the measurement, the areas of the peak were measured using aqueous solutions of sucrose of 10 ppm, 50 ppm and 100 ppm to obtain a calibration curve. In a profile of each sample, an area of the peak for the same retention time as that of sucrose was obtained, to thereby calculate the concentration.

It should be noted that, with respect to each of the above-described roasted coffee beans, roasted coffee beans on which the sugar-enriching treatment step was not performed were prepared, and the sucrose concentration was measured in the same manner (in Table 2, these extracts are referred to as "untreated sample").

The results are shown in Table 2. Since the sucrose concentration in the sample with sugar-enriching treatment was increased more as compared with the sucrose concentration in the untreated sample, it is considered that the sucrose content of the roasted coffee beans was increased in all samples by the sucrose immersion treatment, and a remarkable increase was observed especially in *C. robusta.* This result shows that the method can increase the sucrose content of the roasted coffee beans.

[Table 2]

| | Sucrose concentration (ppm) | |
|---|---|---|
| | Untreated sample | Sample with sugar-enriching treatment |
| *C. arabica* | 92.9 | 98.1 |
| *C. robusta* (*conilon*) | 24.2 | 61.8 |
| *C. robusta* (*vietnam*) | 18.9 | 66.3 |

[Example 3]

(Conditions)

- Roasted coffee beans: *C. robusta*
- Sugar-enriching treatment step: immersing the roasted coffee beans in a 30 wt% aqueous solution of sucrose
- Water vapor treatment step: continuous water vapor treatment (treatment condition: temperature = 190°C; time period = 4 minutes)

With respect to *C. robusta* beans having the sucrose content increased by the sugar-enriching treatment, it was examined how a succinic acid content of the roasted coffee beans changes when a water vapor treatment step (190°C) is performed.

The test was performed using the roasted coffee beans of two types of *C. robusta* (*conilon* and *vietnam*). For the sugar-enriching treatment step, 100 g of each of the roasted coffee beans was immersed in 500 mL of a 30 wt% aqueous solution of sucrose (prepared by dissolving 300 g of JIS special grade reagent (manufactured by Nacalai Tesque, Inc.) into 1,000 mL of ion-exchange water) at room temperature for 1 hour, and then dried with hot air at 90°C for 1 hour.

With respect to the coffee beans having undergone the sugar-enriching treatment, a water vapor treatment step (190°C, 4 minutes) was performed. In a pressure vessel (coffee bean container) having a pressure resistance to 3.0 MPa equipped with vapor inlet piping and outlet piping was placed 2.0 kg of roasted coffee beans and a water vapor treatment was performed in which saturated water vapor (190°C, 0.9 MPa) was passed from the inlet piping at a flow rate of 210 kg/hr per kg of the roasted coffee beans. From each type of the obtained roasted coffee beans, an extract was prepared (in Table 3, these extracts are referred to as "sample with water vapor treatment + sugar-enriching treatment").

In addition, the roasted coffee beans of *C. robusta* (*conilon* and *vietnam*) on which only the water vapor treatment step (190°C, 4 minutes) was performed were prepared, and an extract was obtained from each type (in Table 3, these extracts are referred to as "sample with water vapor treatment").

Moreover, the roasted coffee beans of two types of *C. robust* on which neither the sugar-enriching treatment step nor the water vapor treatment step was performed were prepared, and an extract was obtained from each type (in Table 3, these extracts are referred to as "untreated sample").

Each extract as obtained above was subjected to filtration, and the succinic acid concentration was measured using a high-performance liquid chromatography (manufactured by Shimadzu Corporation), For the measurement, a single point calibration was performed using 200 ppm of a succinic acid standard solution, and the concentration was calculated based on peak areas for the same retention time.

In addition, the succinic acid content of the roasted coffee beans was calculated using the following equation:

$$\text{Succinic acid content in 1 g of roasted coffee beans}$$

$$= \text{Succinic acid concentration (ppm)} \times \text{Extract amount (L) / Weight (g) of}$$

roasted coffee beans

The results are shown in Table 3 below. It was confirmed that the succinic acid content was remarkably increased by performing the water vapor treatment after the sucrose immersion treatment. This result shows that the method can remarkably increase the succinic acid content by performing the water vapor treatment on the roasted coffee beans whose sucrose content has been increased.

[Table 3]

| | Succinic acid content (mg/g) | | |
|---|---|---|---|
| | Untreated sample | Sample with water vapor treatment | Sample with water vapor treatment + Sugar-enriching treatment |
| Conilon | 0.60 | 1.00 | 1.54 |
| Vietnam | 0.61 | 0.95 | 1.35 |

Next, with respect to the above-described two types of *C. robusta* (*conilon* and *vietnam*), sensory evaluation tests were performed on the extracts of "sample with water vapor treatment", and "sample with water vapor treatment + sugar-enriching treatment".

In the sensory evaluation of the extract, the richness/thickness was evaluated using a four-grade scale (1, 2, 3 and 4 points), in which a larger number means stronger and a smaller number means weaker. The acidity was evaluated using a four-grade scale, in which a larger number means weaker and a smaller number means stronger. An average of points given by the six trained graders was taken, and the scores of 3 points or more was marked as "O", the score of 2-point range was marked as "Δ", and the score of 1-point range was marked as "X". With respect to the off-flavor, the presence or absence of the off-flavor was indicated.

The results are shown in Table 4 below. In all samples, no off-flavor was present and the acidity was hardly increased, while in the case where the sugar-enriching treatment step and the water vapor treatment step were performed, enhancement of richness/thickness was observed.

[Table 4]

| | | Sample with water vapor treatment | Sample with water vapor treatment + sugar-enriching treatment |
|---|---|---|---|
| Conilon | Richness/Thickness | Δ | O |
| | Acidity | O | O |
| | Off-flavor | None | None |
| Vietnam | Richness/Thickness | Δ | O |
| | Acidity | O | O |
| | Off-flavor | None | None |

[Example 4]

(Conditions)

- Roasted coffee beans: *C. arabica*
- Sugar-enriching treatment step: immersing the roasted coffee beans in a 30 wt% aqueous solution of sucrose
- Water vapor treatment step: continuous water vapor treatment (treatment conditions: temperature = 190°C; time period = 4 minutes)

In order to examine whether or not the same applies to *C. arabica* beans as it applies to *C. robusta,* a sugar-enriching treatment test was performed on *C. arabica* beans in the same manner as described above. In the same manner as in Example 2, for the sugar-enriching treatment step, 100g of the roasted coffee beans of *C. arabic* was immersed in 500 mL of a 30 wt% aqueous solution of sucrose (prepared by dissolving 300 g of JIS special grade reagent (manufactured by Nacalai Tesque, Inc.) into 1,000 mL of ion-exchange water) at room temperature for 1 hour, and then dried with hot air at 90°C for 1 hour.

With respect to the roasted coffee beans of *C. arabica* having undergone the sugar-enriching treatment, a water vapor treatment step (190°C, 4 minutes) was performed. In a pressure vessel (coffee bean container) having a pressure resistance to 3.0 MPa equipped with vapor inlet piping and outlet piping was placed 2.0 kg of roasted coffee beans and a water vapor treatment was performed in which saturated water vapor (190°C, 0.9 MPa) was passed from the inlet piping at a flow rate of 210 kg/hr per kg of the roasted coffee beans. From the obtained roasted coffee beans, an extract was prepared (in Table 5, the extract is referred to as "sample with water vapor treatment + sugar-enriching treatment").

In addition, the roasted coffee beans on which only the water vapor treatment step (190°C, 4 minutes) was performed were prepared, and an extract was obtained therefrom (in Table 5, the extract is referred to as "sample with water vapor treatment").

Moreover, the roasted coffee beans on which neither the sugar-enriching treatment step nor water vapor treatment step was performed were prepared, and an extract was obtained therefrom (in Table 5, the extract is referred to as "untreated sample").

Each extract as obtained above was subjected to filtration, and the succinic acid concentration was measured using a high-performance liquid chromatography (manufactured by Shimadzu Corporation). For the measurement, a single point calibration was performed using 200 ppm of a succinic acid standard solution, and the concentration was calculated based on peak areas for the same retention time. Next, in the same manner as in Example 3, the succinic acid content of the roasted coffee beans was calculated.

The results are shown in Table 5 below. It was confirmed that the succinic acid content was increased by performing the water vapor treatment after the sucrose immersion treatment.

[Table 5]

| | Succinic acid content (mg/g) | | |
| --- | --- | --- | --- |
| | Untreated sample | Sample with water vapor treatment | Sample with water vapor treatment + sugar-enriching treatment |
| *C. arabica* | 0.60 | 1.69 | 1.73 |

Next, with respect to *C. arabica,* sensory evaluation tests were performed on the extracts of "sample with water vapor treatment", and "sample with water vapor treatment + sugar-enriching treatment".

As the result of the sensory test, no off-flavor was present and the acidity was hardly increased, while enhancement of richness/thickness was observed. It was confirmed that by performing the sugar-enriching treatment step and the water vapor treatment step, the coffee has characteristic taste with a notable depth.

[Example 5]

(Conditions)

- Roasted coffee beans: *C. robusta* (*conilon,* L value = 23)
- Sugar-enriching treatment step: immersing the roasted coffee beans in a 30 wt% aqueous solution of sucrose
- Water vapor treatment step: continuous water vapor treatment (treatment conditions; temperature = 175°C, 190°C, 200°C, 230°C; time period = 4 minutes)

As the roasted coffee beans, four samples (samples 4 - 7) each composed of 100 g of *C. robusta* (*conilon,* L value = 23)) were prepared.

For the sugar-enriching treatment step, each of the samples 4 - 7 was immersed in 500 mL of a 30 wt% aqueous solution of sucrose (prepared by dissolving 300 g of JIS special grade reagent (manufactured by Nacalai Tesque, Inc.) into 1,000 mL of ion-exchange water) at room temperature for 1 hour, and then dried with hot air at 90°C for 1 hour.

With respect to each of the samples 4 - 7 having undergone the sugar-enriching treatment, a water vapor treatment step was performed using a continuous water vapor treatment, with the treatment time period of 4 minutes and various treatment temperatures (sample 4: 175°C, sample 5: 190°C, sample 6: 200°C, and sample 7: 230°C).

In a pressure vessel (coffee bean container) having a pressure resistance to 3.0 MPa equipped with vapor inlet piping and outlet piping was placed each samples 4 - 7 and a water vapor treatment was performed in which saturated water vapor was passed from the inlet piping at a flow rate of 210 kg/hr per kg of the roasted coffee beans. For each of the obtained samples 4 - 7, an extract was prepared.

In addition, the roasted coffee beans (*C. robusta* (*conilon,* L value = 23)) on which neither the sugar-enriching treatment step nor the water vapor treatment step was performed were prepared, and an extract was obtained therefrom (in Table 6, the extract is referred to as "untreated sample").

With respect to each extract as obtained above, in the same manner as in Examples 1 and 3, pH, content of dissolved solid (Brix) including the coffee components, extraction rate, and succinic acid content were measured and sensory evaluation tests (richness/thickness, acidity, and off-flavor) were performed. The results are shown in Table 6 below.

[Table 6]

|  | pH | Brix | Extraction rate | Succinic acid content (mg/g) | Richness/ thickness | Acidity | Off-flavor |
|---|---|---|---|---|---|---|---|
| Untreated sample | 4.86 | 3.02 | 19.6 | 0.60 | X | O | none |
| Sample 4 (175°C) | 4.61 | 3.39 | 22.0 | 0.66 | O | O | none |
| Sample 5 (190°C) | 4.42 | 4.05 | 26.3 | 0.91 | O | O | none |
| Sample 6 (200°C) | 4.23 | 4.56 | 29.6 | 1.41 | O | O | none |
| Sample 7 (230°C) | 4.06 | 4.54 | 29.5 | 2.11 | O | Δ | none |

The succinic acid content was higher in all of the samples 4 - 7 than that in the untreated sample, and it was confirmed that the succinic acid content was remarkably increased.

No off-flavor was sensed in all of the samples 4 - 7 and untreated sample.

The acidity in all of the samples 4 - 6 was at about the same level as that of the untreated sample, and thus the acidity was not practically increased, while the acidity in the sample 7 was slightly stronger than that in the untreated sample.

The richness/thickness was stronger in all of the samples 4 - 7 than that in the untreated sample, and thus enhancement effect was recognized.

[Example 6]

(Conditions)

- Roasted coffee beans: *C. arabica*
- Sugar-enriching treatment step: immersing the roasted coffee beans in an aqueous solution of sucrose (concentration of the aqueous solution of sucrose = 10, 20, and 30 wt%)
- Water vapor treatment step: non-ventilated water vapor treatment (treatment temperature = 100°C and 120°C)

As the roasted coffee beans, four samples (samples 8 - 11) each composed of 100 g of *C. arabica* were prepared. For the sugar-enriching treatment step, the samples 8, 9, 10 and 11, respectively, were immersed in 30, 10, 20 and 30 wt% of aqueous solutions of sucrose each in an amount of 500 mL, at room temperature for 1 hour, then dried with hot air at 90°C for 1 hour.

With respect to each of the samples 8 - 11 having undergone the sugar-enriching treatment, a water vapor treatment step was performed using an autoclave for a non-ventilated (batch-wise) water vapor treatment, while using various treatment temperatures (sample 8: 100°C, samples 9 - 11: 120°C).

An extract was prepared from each of the resultant samples 8 - 11.

The roasted coffee beans (*C. arabica*) on which neither the sugar-enriching treatment step nor the water vapor treatment step was performed were also prepared, and an extract was obtained therefrom (in Table 7, these extracts are referred to as "untreated sample").

With respect to each extract as obtained above, in the same manner as in Examples 1 and 3, pH, content of dissolved solid (Brix) including the coffee components, extraction rate, and succinic acid content were measured and sensory evaluation tests (richness/thickness, acidity, and off-flavor) were performed. The results are shown in Table 7 below.

[Table 7]

| | pH | Brix | Extraction rate | Succinic acid content (mg/g) | Richness/ thickness | Acidity | Off-flavor |
|---|---|---|---|---|---|---|---|
| Untreated sample | 5.14 | 2.83 | 18.4 | 0.67 | X | O | none |
| Sample 8 (30 wt% aqueous solution of sucrose, treatment temperature 100°C) | 5.01 | 2.71 | 17.6 | 0.69 | O | O | none |
| Sample 9 (10 wt% aqueous solution of sucrose, treatment temperature 120°C) | 4.8 | 2.71 | 17.6 | 0.83 | O | O | none |
| Sample 10 (20 wt% aqueous solution of sucrose, treatment temperature 120°C) | 4.78 | 2.79 | 18.1 | 0.85 | O | O | none |
| Sample 11 (30 wt% aqueous solution of sucrose, treatment temperature 120°C) | 4.78 | 2.71 | 17.6 | 0.82 | O | O | none |

The succinic acid content was higher in all of the samples 8 - 11 than that in the untreated sample, and it was confirmed that the succinic acid content was remarkably increased.

No off-flavor was sensed in all of the samples 8 - 11 and untreated sample.

The acidity in all of the samples 8 - 11 was at about the same level as that of the untreated sample, and the richness/ thickness was stronger in all of the samples 8 - 11 than that in the untreated sample, and thus enhancement effect was recognized.

[Example 7]

(Conditions)

- Roasted coffee beans: *C. robusta* (*conilon*)
- Sugar-enriching treatment step: applying or spraying a 30 wt% aqueous solution of sucrose on the roasted coffee beans
- Water vapor treatment step: continuous water vapor treatment (treatment conditions: temperature = 190°C; time period = 4 minutes)

As the roasted coffee beans, two samples (samples 12 and 13) each composed of 100 g of *C. robusta* (*conilon*, L value = 23)) were prepared.
For the sugar-enriching treatment step, a 30 wt% aqueous solution of sucrose was applied to the sample 12, while sprayed on the sample 13. Afterwards, these samples were dried with hot air at 90°C for 1 hour.

With respect to each of the samples 12 and 13 having undergone the sugar-enriching treatment, a water vapor treatment step (treatment temperature: 190°C, 4 minutes) was performed using a continuous water vapor treatment. In a pressure vessel (coffee bean container) having a pressure resistance to 3.0 MPa equipped with vapor inlet piping and outlet piping was placed the sample 12 or 13 and a water vapor treatment was performed in which saturated water vapor was passed from the inlet piping at a flow rate of 210 kg/hr per kg of the roasted coffee beans.
From each of the obtained samples 12 and 13, an extract was prepared.

With respect to each extract as obtained above, in the same manner as in Examples 1 and 3, pH, content of dissolved solid (Brix) including the coffee components, extraction rate, and succinic acid content were measured and sensory evaluation tests (richness/thickness, acidity, and off-flavor) were performed. The results are shown in Table 8 below. It should be noted that the untreated sample in Table 8 is the same as the sample in Table 6 of Example 5.

[Table 8]

|  | pH | Brix | Extraction rate | Succinic acid content (mg/g) | Richness/ thickness | Acidity | Off-flavor |
|---|---|---|---|---|---|---|---|
| Untreated sample | 4.86 | 3.02 | 19.6 | 0.60 | X | O | none |
| Sample 12 (application) | 4.38 | 4.10 | 26.7 | 0.92 | O | O | none |
| Sample 13 (spraying) | 4.40 | 4.05 | 26.3 | 0.95 | O | O | none |

The succinic acid content was higher in both of the samples 12 and 13 than that in the untreated sample, and it was confirmed that the succinic acid content was remarkably increased.
No off-flavor was sensed in both of the samples 12 and 13.
The acidity in both of the samples 12 and 13 was at about the same level as that of the untreated sample, and the richness/thickness was stronger in both of the samples 12 and 13 than that in the untreated sample, and thus enhancement effect was recognized.

[Example 8]

(Conditions)

- Roasted coffee beans: *C. robusta* (*conilon*)
- Sugar-enriching treatment step: immersing the roasted coffee beans in a 30 wt% aqueous solution of glucose, or a 30 wt% aqueous solution of maltose
- Water vapor treatment step: continuous water vapor treatment (treatment conditions: temperature = 190°C; time period = 4 minutes)

As the roasted coffee beans, two samples (samples 14 and 15) each composed of 100 g of *C. robusta* (*conilon*, L value = 23) were prepared.
For the sugar-enriching treatment step, the samples 14 and 15 were immersed in a 30 wt% aqueous solution of glucose (500mL) and a 30 wit% aqueous solution of maltose (500mL), respectively, at room temperature for 1 hour, then dried with hot air at 90°C for 1 hour.

With respect to each of the samples 14 and 15 having undergone the sugar-enriching treatment, a water vapor treatment step (treatment temperature: 190°C, 4 minutes) was performed using a continuous water vapor treatment. In a pressure vessel (coffee bean container) having a pressure resistance to 3.0 MPa equipped with vapor inlet piping and outlet piping was placed the sample 14 or 15 and a water vapor treatment was performed in which saturated water vapor was passed from the inlet piping at a flow rate of 210 kg/hr per kg of the roasted coffee beans.
From each of the obtained samples 14 and 15, an extract was prepared.

With respect to each extract as obtained above, in the same manner as in Examples 1 and 3, pH, content of dissolved solid (Brix) including the coffee components, extraction rate, and succinic acid content were measured and sensory evaluation tests (richness/thickness, acidity, and off-flavor) were performed. The results are shown in Table 9 below. It should be noted that the untreated sample and the sample 5 in Table 8 are the same as those in Table 6 of Example 5.

[Table 9]

|  | pH | Brix | Extraction rate | Succinic acid content (mg/g) | Richness/ thickness | Acidity | Off-flavor |
|---|---|---|---|---|---|---|---|
| Untreated sample | 4.86 | 3.02 | 19.6 | 0.60 | X | O | none |
| Sample 5 (sucrose) | 4.42 | 4.05 | 26.3 | 0.91 | O | O | none |
| Sample 14 (glucose) | 4.49 | 4.63 | 30.1 | 1.13 | O | O | none |
| Sample 15 (maltose) | 4.51 | 4.91 | 31.9 | 1.13 | O | O | none |

The succinic acid content was higher in both of the samples 14 and 15 than that in the untreated sample, and further higher than that in the sample 5 (sucrose). It was confirmed that the succinic acid content was remarkably increased.
No off-flavor was sensed in both of the samples 14 and 15.
The acidity in both of the samples 14 and 15 was at about the same level as that of the untreated sample, and the richness/thickness was stronger in both of the samples 14 and 15 than that in the untreated sample, and thus enhancement effect was recognized.

Industrial applicability

The method for treating roasted coffee beans in the present invention can be used in, for example, production of roasted coffee beans and coffee beverages.

**Claims**

1. A method for treating roasted coffee beans comprising:

    a sugar-enriching treatment step in which roasted coffee beans are brought into contact with sugar to increase a sugar content of the roasted coffee beans; and
    a water vapor treatment step in which the roasted coffee beans having undergone the sugar-enriching treatment are brought into contact with water vapor.

2. The method for treating roasted coffee beans according to claim 1, wherein the roasted coffee beans are roasted whole beans.

3. The method for treating roasted coffee beans according to claim 1 or 2, wherein the sugar is selected from the group consisting of sucrose, glucose and maltose.

4. The method for treating roasted coffee beans according to any one of claims 1 to 3, wherein the sugar-enriching treatment comprises a treatment of bringing the roasted coffee beans into contact with a sugar solution.

5. The method for treating roasted coffee beans according to claim 4, wherein the sugar solution is an aqueous solution.

6. The method for treating roasted coffee beans according to any one of claims 1 to 5, wherein the roasted coffee beans are those of *Coffea robusta.*

7. The method for treating roasted coffee beans according to any one of claims 1 to 6, wherein, in the water vapor treatment step, the water vapor is brought into contact in a ventilated state.

8. The method for creating roasted coffee, beans according to claim 7, wherein, in the water vapor treatment step, the roasted coffee beans having undergone the sugar-enriching treatment are placed in a processing tank equipped with a water vapor supply pathway and a water vapor effluent pathway, and the water vapor is passed from the water vapor supply pathway to the water vapor effluent pathway so as to be discharged from the water vapor effluent pathway at a pressure higher than atmospheric pressure.

9. The method for treating roasted coffee beans according to any one of claims 1 to 6, wherein, in the water vapor treatment step, the water vapor is brought into contact in a sealed state.

10. The method for treating roasted coffee beans according to any one of claims 1 to 9, wherein the water vapor is saturated water vapor whose temperature is 100°C - 230°C.

11. A roasted coffee bean treated by the method for treating roasted coffee beans according to any one of claims 1 to 10.

12. The roasted coffee bean according to claim 11, wherein a succinic acid content is 0.69 mg/g or more.

13. A coffee beverage made from the roasted coffee beans according to claim 11 or 12.

<table>
<tr><td colspan="2" align="center">**INTERNATIONAL SEARCH REPORT**</td><td>International application No.<br>PCT/JP2008/073429</td></tr>
</table>

A.  CLASSIFICATION OF SUBJECT MATTER
*A23F5/10(2006.01)i, A23F5/24(2006.01)i*

According to International Patent Classification (IPC) or to both national classification and IPC

B.  FIELDS SEARCHED

Minimum documentation searched (classification system followed by classification symbols)
A23F5/00-5/50

Documentation searched other than minimum documentation to the extent that such documents are included in the fields searched

Electronic data base consulted during the international search (name of data base and, where practicable, search terms used)
WPI/Foodline/FSTA(DIALOG), JSTPlus/JST7580(JDreamII)

C.  DOCUMENTS CONSIDERED TO BE RELEVANT

| Category* | Citation of document, with indication, where appropriate, of the relevant passages | Relevant to claim No. |
|---|---|---|
| Y | WO 2005/011396 A1 (Suntory Ltd.),<br>10 February, 2005 (10.02.05),<br>& EP 1654935 A1 & CN 1829444 A<br>& US 2007/0092613 A1 | 1-13 |
| Y | JP 2000-342182 A (Pokka Corp.),<br>12 December, 2000 (12.12.00),<br>(Family: none) | 1-13 |
| Y | JP 2001-112415 A (Hayashibara Biochemical Labs., Inc.),<br>24 April, 2001 (24.04.01),<br>(Family: none) | 1-13 |

☐  Further documents are listed in the continuation of Box C.    ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 January, 2009 (15.01.09) | Date of mailing of the international search report<br>27 January, 2009 (27.01.09) |
|---|---|
| Name and mailing address of the ISA/<br>Japanese Patent Office | Authorized officer |
| Facsimile No. | Telephone No. |

Form PCT/ISA/210 (second sheet) (April 2007)

**EP 2 233 012 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005011396 A